(19) **Europäisches Patentamt**
**European Patent Office**
**Office européen des brevets**

(11) **EP 1 638 317 B1**

(12) **EUROPÄISCHE PATENTSCHRIFT**

(45) Veröffentlichungstag und Bekanntmachung des Hinweises auf die Patenterteilung:
**21.05.2014 Patentblatt 2014/21**

(51) Int Cl.:
*H04N 5/232* *(2006.01)*    *H04N 5/225* *(2006.01)*

(21) Anmeldenummer: **04026211.5**

(22) Anmeldetag: **04.11.2004**

(54) **Vorrichtung zur Bildstabilisierung**

Image stabilization device

Dispositif de stablisation d'image

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **18.09.2004 DE 102004045430**

(43) Veröffentlichungstag der Anmeldung:
**22.03.2006 Patentblatt 2006/12**

(73) Patentinhaber: **Deutsche Telekom AG**
**53113 Bonn (DE)**

(72) Erfinder: **Brackmann, Ludwig, Dipl.-Ing.**
**53225 Bonn (DE)**

(56) Entgegenhaltungen:
**EP-A- 1 304 872    EP-A- 1 377 040**
**WO-A-02/37179    WO-A-99/12355**
**JP-A- 2 058 481    JP-A- 9 261 524**

**Beschreibung**

Gebiet der Erfindung

Die Erfindung betrifft eine Vorrichtung zur Bildstabilisierung im Allgemeinen und eine Vorrichtung zur Bildstabilisierung mit Mitteln zur Bildauswertung und Korrektur von Verwacklungen im Besonderen.

Hintergrund der Erfindung

Das Aufnehmen von bewegten Bildern erfreut sich immer größerer Beliebtheit. Einen Durchbruch auf diesem Gebiet haben Kameras mit Bildsensoren mit CCD-Technik (CCD: charged coupled devices) gebracht. Insbesondere werden derartige Kamerasysteme immer kleiner und leichter. Dadurch ist der Einbau von Foto- bzw. Videokameras in Mobiltelefonen möglich geworden, so dass die Massennutzung der Bildtelefonie z.B. für Videokonferenzen greifbar geworden ist. Spätestens mit der Einführung des Code-Multiplexverfahrens (UMTS) hat diese Anwendung im Mobilfunkbereich einen neuen Schub erhalten.

Hierbei ergeben sich jedoch einige Schwierigkeiten in der praktischen Umsetzung. Mobiltelefone werden typischer Weise einhändig mit halb ausgestrecktem Arm gehalten, um das eigene Gesicht aufzunehmen. Bei dieser Haltung, insbesondere in Verbindung mit der geringen Größe und dem geringen Gewicht des Mobiltelefons fällt es besonders schwer, das Mobiltelefon so ruhig zu halten, dass eine verwacklungsarme Bildübertragung gewährleistet ist. Gerade beim Video-Conferencing mit Mobiltelefon ist es aber problematisch, wenn Kamerabewegungen und Sprecherbewegungen unterschiedlich sind und das Bild daher verwackelt. Auch nur leichte, oftmals unbewußte Bewegungen der Hand oder des Kopfes, sorgen bereits für ein deutliches Wackeln des zu übertragenden Bildes. Eine verwackelte Bildübertragung lässt jedoch das Qualitätsempfinden stark sinken.

Aus dem Videokamerabereich sind nun bereits einige Systeme zur Korrektur von Verwacklungen bekannt.

Aus der EP 04 98 730 A2 ist z.B. eine Videosignalverarbeitende Vorrichtung bekannt, die in Verbindung mit einer Einrichtung zur Korrektur manuell verursachter Vibrationen bei einer Videokamera verwendet werden kann. Diese Vorrichtung verfügt über Mittel, die einen Bewegungsvektor erzeugen, welcher einen Bewegungsbetrag und eine Bewegungsrichtung zwischen aufeinander folgenden Videosignalrahmen darstellt.

Die beschriebene Vorrichtung weist ferner Mittel auf, die entscheiden können, ob der ermittelte Bewegungsvektor eine unerwünschte Bewegung der Kamera darstellt oder nicht. Weiter ist eine Einrichtung zur Erzeugung von Korrektur- oder Steuersignalen in Abhängigkeit des ermittelten Bewegungsvektors vorgesehen, um unerwünschte Schwankungen der Kamera kompensieren zu können.

Die Bestimmung des Bewegungsvektors ist jedoch insbesondere in Bezug auf die Anforderungen im Mobilfunkbereich und das Bildpunktstandort des Bildes zusammen mit den Änderungen der Helligkeit eines benachbarten Bildpunktstandortes abgetastet wird. Diese Änderungen werden dann verwendet, um sowohl die Verschiebung des ganzen Bildes als auch einen richtungsabhängigen Grad der Bildänderung zu berechnen. Schließlich wird ein die Gesamtverschiebung darstellendes Signal berechnet, welches unter anderem verwendet wird, um die Bewegung eines Films in einer Richtung zu steuern, um die Unschärfe im aufgezeichneten Bild zu minimieren.

Des weiteren beschreibt die EP 0 956 695 B1 einen Bewegungssensor, der eine Analyse mehrerer Bilder vornimmt, und daraus einen Szenebewegungsparameter bestimmt. Die Berechnungseinheit, die in diesem Dokument auch als Bewegungssensor bezeichnet wird, kann Teil eines Bildstabilisierungssystems sein. Hierzu wird ausgeführt, dass die praktischste Technik darin besteht, zwei in einer Reihe angeordnete aufeinander folgende Teilbilder oder Vollbilder zu analysieren, um den Szenebewegungsparameter zu bestimmen.

Weiterhin beschreibt die EP 1 304 872 A1 (D1) eine Mikrokamera, bei der eine Bildstabilisierung durchgeführt wird indem deren Linse oder Kameramodul mittels Stellgliedern die Bewegung der Kamera Kompensiert. Die Bewegungserfassung erfolgt durch Bewegungssensoren. Kompensiert werden Kippbewegungen der Kamera.

Die WO 02/37179 A2 (D2) beschreibt ebenfalls eine Bildstabilisierung einer Kamera um eine Person oder ein anderes Objekt zu verfolgen. Die Bewegungserfassung erfolgt hier mittels Bildauswertung.

Die JP 2 058481 A (D3) beschreibt eine Vorrichtung zur Bildstabilisierung durch Bildauswertung zum Detektieren von Veränderungen um mittels Piezo-Elementen die Drehbewegung des Aufnahmesensors zu kompensieren.

Die JP 9 261524 A (D4) beschreibt eine Vorrichtung zur Bildstabilisierung mittels Beschleunigungssensoren wobei die Detektion von Verwacklungen anhand der Beschleunigungsdaten erfolgt.

Diese Systeme arbeiten allesamt vollelektronisch, so dass typischer Weise ein Teil der möglichen Auflösung verschenkt wird, um die Stabilisierung zu bewerkstelligen. Denn bei der elektronischen Bildstabilisierung werden heute üblicherweise nicht benutze Rand-Pixel des CCD-Bildwandlers dazu benutzt, die Bewegungen des Video- oder Fotografen zu ermitteln und anschließend rechnerisch wieder auszugleichen. Wie bei vielen elektronischen Hilfsmitteln, wie dem Digital-ZOOM oder der Pixel-Interpolation hat dies eine mehr oder weniger erhebliche Qualitätseinbuße zur Folge. Dies mag bei hochauflösenden Systemen nicht als zu nachteilig empfunden werden.

Insbesondere bei Bildtelefonen sind jedoch trotz der immer auszugleichen. Wie bei vielen elektronischen Hilfsmitteln, wie dem Digital-ZOOM oder der Pixel-Interpolation hat dies eine mehr oder weniger erhebliche Qualitätseinbuße zur Folge. Dies mag bei hochauflösenden Systemen nicht als zu nachteilig empfunden werden.

Insbesondere bei Bildtelefonen sind jedoch trotz der immer steigenden Datenübertragungsraten die derzeit vernünftig übertragbare Bild-Auflösung und Wiederholrate erheblich geringer. Dabei sind gerade bei Mobiltelefonen einerseits die Größenanforderungen extrem und andererseits herrscht ein enormer Kostendruck, so dass auf möglichst preisgünstige und niedrigauflösende CCD-Chips zurückgegriffen wird. Typische Auflösungen eines Bildtelefons können hierbei im VGA-Bereich liegen.

Daher ist es wünschenswert, ein Bildstabilisierungssystem zu besitzen, welches anders als die digitale Bildbearbeitung die Auflösung des Bildaufnahmesensors weitgehend erhält.

Eine optische Bildstabilisierung wird hauptsächlich bei Ferngläsern, Videokameras und Kleinbild-Objektiven angewandt. Die Bewegungen des Benutzers werden von sogenannten Gyroskopen detektiert. Gyroskope sind kreiselähnliche Geräte, die Bewegungen um die horizontale und vertikale Achse registrieren können. Sobald die Kamera bzw. das Objektiv festgestellt hat, in welche Richtung sich die Aufnahmelinse bewegt, wird eine, zumeist in einer Flüssigkeit gelagerte, spezielle Brechungslinse fast zeitgleich genau in die entgegengesetzte Richtung bewegt, so dass die Kameraverwacklungen weitgehend ausgeglichen werden.

Z.B. ist aus der DE 199 42 900 B4 eine Vorrichtung zur Korrektur von Bildfehlern, die durch ein Kameraverwackeln hervorgerufen werden, bekannt. Um ein Kamerverwackeln in Horizontal- und Vertikalrichtung und eine Rotation zu detektieren, sind drei Paare von Beschleunigungssensoren vorgesehen. Die von den Beschleunigungssensoren gelieferten Korrektursignale werden Mehrschicht-Piezostellgliedern zugeführt, die mit einem CCD-Sensor verbunden sind. Mit Hilfe der Mehrschicht-Piezostellglieder lässt sich der CCD-Sensor in der X-Richtung und in der Y-Richtung verschieben, was in nachteiliger Weise nur eine begrenzte Korrektur ermöglicht. Die Verwendung von sechs Beschleunigungssensoren erscheint jedoch umständlich, komplex und platzintensiv.

Um eine unerwünschte Rotation des Kameragehäuses zu kompensieren, ist ferner ein Rotationsglied, beispielsweise in Form einer Drehwelle vorgesehen, die mit einem Mehrschicht-Piezostellglied zusammenwirkt. Eine Drehwelle ist jedoch konstruktiv aufwändig, störungsanfällig und allenfalls schlecht für Anwendungen mit engen räumlichen Restriktionen, wie in Mobiltelefonen geeignet.

Nachteiligerweise können mit dieser Technik jedoch keine Motiv- oder Objektverwacklungen kompensiert werden.

Generell lassen sich diese für im Vergleich zu einem Mobiltelefon großen Videokameras entwickelte kostspielige Systeme auch aufgrund der extremen Platzbeschränkungen in einem Mobiltelefon nicht ohne Weiteres übertragen. Ferner sind die Stabilitätsanforderungen bei Mobiltelefonen allgemein höher als bei typischer Weise mit mehr Bedacht gehandhabten Kameras.

Allgemeine Beschreibung der Erfindung

Die Erfindung hat sich daher die Aufgabe gestellt, eine einfache, kostengünstige und kompakte Vorrichtung zur Bildstabilisierung, bereit zu stellen, welche die Auflösung des Bildaufnahmesensors möglichst gut ausnutzt, ohne dabei auf mechanische Gyrosensoren zurückgreifen zu müssen.

Noch eine Aufgabe der Erfindung ist es, eine Vorrichtung zur Bildstabilisierung bereit zu stellen, welche die Vorzüge einer Bilderkennung auch zur Korrektur von Objektbewegungen nutzt.

Eine weitere Aufgabe der Erfindung ist es, eine derartige Vorrichtung, bereit zu stellen, welche sich insbesondere zum Einbau in handhaltbare mobile Bildtelefone eignet und kostengünstig in Massenproduktion herstellbar ist.

Noch eine Aufgabe der Erfindung ist es, eine derartige Vorrichtung, bereit zu stellen, welche in der Lage ist, einen großen Verwacklungshub zu kompensieren.

Noch eine weitere Aufgabe der Erfindung ist es, eine derartige Vorrichtung, bereit zu stellen, welche die Nachteile bekannter Vorrichtungen vermeidet oder zumindest mindert.

Die Aufgabe der Erfindung wird in überraschend einfacher Weise bereits durch den Gegenstand der unabhängigen Ansprüche gelöst. Vorteilhafte Weiterbildungen der Erfindung sind in den Unteransprüchen definiert.

Erfindungsgemäß wird eine Vorrichtung zur elektronischen Bildstabilisierung von elektronischen Bilddaten oder Videobilddaten mittels digitaler Bildauswertung bereitgestellt, welche z.B. in handhaltbaren mobilen Bildtelefonen eingesetzt werden kann. Unter solchen mobilen Bildtelefonen werden hierbei nicht nur klassische "Handys", sondern auch sogenannte "personal digital assistants" (PDAs), "mobile digital assistants" (MDAs) und sonstige mobile Geräte verstanden, mit denen eine Bildübertragung bewerkstelligt wird und die durch die Eigenschaft von einem Benutzer in der Hand gehalten zu werden Verwacklungen ausgesetzt sein können.

Die Vorrichtung umfasst einen Bildaufnahmesensor, vorzugsweise ein CCD-Chip, zum Aufnehmen bzw. Erzeugen der Videobilddaten, eine Recheneinrichtung, z.B. einen digitalen Mikrocomputer, welche(r) die digitalen Videobilddaten von dem Bildaufnahmesensor empfängt und verarbeitet. Die Recheneinrichtung umfasst ferner Detektionsmittel, welche zum Detektieren von Verwacklungen in der Videobildabfolge ausgebildet sind, derart dass eine Bildauswertung und Bild-, insbesondere Gesichtserkennung in den Videobilddaten durchgeführt wird und mithilfe der Detektionsmittel Veränderungen in der zeitlichen Abfolge der Videobilddaten erkannt werden. Die Detektionsmittel sind insbesondere als elektronische und/oder digitale Detektionsmittel ausgebildet und werden bevorzugt mittels einer entsprechend ausgebildeten Hardware oder entsprechend programmierten Software, z.B. einer Bilderkennungssoftware realisiert. Ein Vorteil dieser digital-elektronischen Bildauswertung ist, dass auf mechanisch komplizierte und empfindliche Gyrosensoren verzichtet werden kann. Dadurch wird die Vorrichtung störungsunanfällig und kann sehr klein gebaut werden. Ferner können auch Objektbewegungen detektiert werden.

Mittels der erkannten Bild-Veränderungen werden ein Steuersignale zur Steuerung einer Ausgleichseinrichtung erzeugt. Die Ausgleichseinrichtung kompensiert oder vermindert zumindest die Verwacklungen. Hierzu weist die Ausgleichseinrichtung eine Mehrzahl von elektromikromechanischen Stellgliedern auf, an denen der Bildaufnahmesensor aufgehängt und befestigt ist. Die Steuersignale sind bevorzugt elektrische Steuersignale, mittels welchen die mikromechanischen Stellglieder gesteuert werden und zwar derart, dass der Bildaufnahmesensor mechanisch von den Stellgliedern bewegt wird, um der Verwacklung entgegenzuwirken und so die Videobilddaten zu stabilisieren. Der Bildaufnahmesensor wird demnach automatisch und vorzugsweise kontinuierlich entgegengesetzt zu den Verwacklungs-Bewegungen der Kamera und des Objekts bewegt, um die Verwacklungen zu kompensieren.

Diese mechanische Kompensation besitzt gegenüber der bislang häufig verwendeten Software-Kompensation den Vorteil, dass keine Randpixel verschenkt werden müssen, so dass auch wenn die Verwacklungskompensation in Betrieb ist, die volle Auflösung des CCD-Chips ausgenutzt werden kann. Der Verlust einiger Randpixel mag bei teuren und aufwändigen Videokameras mit hoher Auflösung dem Fachmann zunächst nicht so gravierend erscheinen, ist aber beim Einsatz in Mobiltelefonen von besonderem Vorteil, da diese im Gegensatz zu Videokameras häufig von vornherein eine geringere Auflösung z.B. in VGA Qualität besitzen.

Selbstverständlich läßt sich die Vorrichtung aber auch für Foto- oder Videokameras nutzen.

Vorzugsweise umfasst die Mehrzahl der Stellglieder eine erste und/oder zweite Gruppe von Stellgliedern, bzw. ist insbesondere in zwei Gruppen von Stellgliedern unterteilt, wobei die Stellglieder der ersten Gruppe quer oder senkrecht zu den Stellgliedern der zweiten Gruppe verlaufen. Mittels der, vorzugsweise linear agierenden, Stellglieder der ersten Gruppe wird eine Verkippung des Bildaufnahmesensors quer zur Normalen der Bildebene (optische Achse) bewerkstelligt, um Verschwenkungen der Kamera durch den Benutzer und/oder eine Objektbewegung quer zur optischen Achse in zwei Dimensionen (X- und Y-Richtung), also um zwei Freiheitsgrade, zu kompensieren. Die Verkippung ist insbesondere für die baulichen und optischen Verhältnisse eines Bildtelefons geeignet, da sich mittels der Verkippung des Bildaufnahmesensors in vorteilhafter Weise ein relativ großer Hub und damit eine effektive Verwacklungskompensation erreichen läßt.

Ferner wird mit den Stellgliedern der zweiten Gruppe eine Drehung des Bildaufnahmesensors um die optische Achse des Bildaufnahmesensors bewerkstelligt, um entsprechende Verdrehungen um die optische Achse, also bezüglich eines dritten Freiheitsgrades, zu kompensieren.

Mittels dieser unabhängigen Steuerung der Stellglieder der ersten und zweiten Gruppe bezüglich der drei Freiheitsgrade wird eine besonders effektive Verwacklungskompensation erzielt.

Vorzugsweise sind die Stellglieder der ersten Gruppe zur Durchführung einer Linearbewegung entlang einer Längsachse ausgebildet und mit ihrer Längsachse quer oder im wesentlichen senkrecht zur Bildebene des Bildaufnahmesensors angeordnet, um die Verkippung des Bildaufnahmesensors quer zur Normalen der Bildebene zu bewerkstelligen.

Gemäß einer besonders bevorzugten Ausführungsform der Erfindung sind die Stellglieder der ersten Gruppe an der Rückseite des Bildaufnahmesensors, welche der optisch aktiven Seite gegenüberliegt, angebracht und befestigt. Insbesondere sind die Stellglieder der ersten Gruppe auf der Rückseite des CCD-Chips in den CCD-Chip integriert. Dies ermöglicht eine geringer Baugröße und eine kostengünstige Massenproduktion, was wiederum besonders im hart umkämpften Markt der Bildtelefone von Vorteil ist.

Als besonders vorteilhaft hat es sich erwiesen, wenn die erste Gruppe genau aus drei Stellgliedern besteht, welche ein an der Rückseite des Bildaufnahmesensors angeordnetes Dreibein bilden. In vorteilhafter Weise kann auf störende Elemente auf der Vorderseite des Bildaufnahmesensors verzichtet werden und es kann mittels des Dreibeins eine einfache zwei-dimensionale Verkippung des Bildaufnahmesensors quer zur Normalen der Bildebene bewerkstelligt werden.

Gemäß einer bevorzugten Weiterbildung der Erfindung, sind die Stellglieder der zweiten Gruppe zur Durchführung einer Linearbewegung entlang einer Längsachse ausgebildet und sind mit ihrer Längsachse quer zur Normalen der Bildebene oder im wesentlichen parallel zur Bildebene des Bildaufnahmesensors angeordnet, um die Drehung des Bildaufnahmesensors um die Normale der Bildebene zu bewerkstelligen. Vorzugsweise werden die Stellglieder der ersten und zweiten Gruppe unabhängig voneinander gesteuert und bewirken gegenüber der jeweils anderen Gruppe im Wesentlichen unabhängige Bewegungen.

Vorzugsweise definiert der Bildaufnahmesensor bzw. der CCD-Chip, Seitenflächen, welche quer zur Bildebene verlaufen, wobei die Stellglieder der zweiten Gruppe an den Seitenflächen aufgehängt und befestigt sind.

Insbesondere ist der Bildaufnahmesensor in seiner Bildebene im wesentlichen rechteckig ausgebildet und die zweite Gruppe besteht aus vier Stellgliedern, die jeweils am Ende einer Seitenfläche aufgehängt sind und mit ihrer jeweiligen Lächsachse parallel zu einer benachbarten Seitenfläche verlaufen, wobei mittels der Stellglieder der zweiten Gruppe eine bidirektionale Drehung des Bildaufnahmesensors um die Normale der Bildebene bewerkstelligt wird. Vorzugsweise ist hierzu der Bildaufnahmesensor in einem Gehäuse angeordnet und mittels der Stellglieder innerhalb des Gehäuses beweglich an diesem aufgehängt.

Die vorstehend beschriebene Anordnung ist besonders vorteilhaft, da die Stellglieder der ersten und/oder zweiten Gruppe durch linear agierende Piezoelemente realisiert werden können, welche mittels jeweils einem elektrischen Steuersignal direkt angesteuert und angetrieben werden.

Die Detektionsmittel sind bevorzugt derart ausgebildet, dass sie anhand der zeitlichen Abfolge der Videobilddaten Differenzwinkel bestimmen und anhand der Größe der Differenzwinkel und vordefinierter Entscheidungskriterien eine Unterscheidung zwischen gewollten und ungewollten Bewegungen getroffen wird. Anschließend können die als ungewollt definierten Bewegungen soweit möglich kompensiert werden, wobei die als gewollt definierten Bewegungen unkompensiert bleiben.

Ferner sind die Detektionsmittel bevorzugt digitalelektronische Detektionsmittel, z.B. eine entsprechende Software, welche derart ausgebildet ist, dass mittels ihr eine Gesichtserkennung durchgeführt wird.

Für die Gesichtserkennung wird vorzugsweise zumindest eine Erkennung von mehreren markanten Gesichtsmerkmalen, welche aus der Gruppe gebildet von Augen, Nase und Mund eines Gesichts ausgewählt sind, durchgeführt. Hierzu wird jedem erkannten Gesichtsmerkmal (Auge, Nase, Mund etc.) ein Bezugspunkt zugeordnet. Anschließend kann jeder Bezugspunkt als ein Referenzpunkt verwendet werden oder es wird aus mehreren, insbesondere drei Bezugspunkten ein Mittelpunkt, z.B. Schwerpunkt berechnet, der als Referenzpunkt für jedes Einzelbild verwendet wird. Anhand des/der Referenzpunkte(s) wird die Bildstabilisierung mittels einer kontinuierlichen Nachverfolgung des/der Referenzpunkte(s) in den Videobilddaten durchgeführt.

Im Folgenden wird die Erfindung anhand von Ausführungsbeispielen und unter Bezugnahme auf die Zeichnungen näher erläutert, wobei gleiche und ähnliche Elemente teilweise mit gleichen Bezugszeichen versehen sind und die Merkmale der verschiedenen Ausführungsbeispiele miteinander kombiniert werden können.

Kurzbeschreibung der Figuren

Es zeigen:

Fig. 1    eine schematische Seitenansicht der Vorrichtung gemäß einer ersten Ausführungsform der Erfindung,

Fig. 2    die Vorrichtung aus Fig. 1 in gekipptem Zustand,

Fig. 3    eine transparente Draufsicht von oben auf die Vorrichtung aus Fig. 1,

Fig. 4    eine transparente Draufsicht von oben auf die Vorrichtung gemäß einer zweiten Ausführungsform der Erfindung,

Fig. 5    eine transparente Draufsicht von oben auf die Vorrichtung aus Fig. 4 in einem gedrehten Zustand,

Fig. 6    eine schematische Darstellung eines menschlichen Gesichts,

Fig. 7    das Gesicht aus Fig. 6 mit einer Mehrzahl von Bezugspunkten und

Fig. 8    eine blockartige Darstellung des Verfahrensablaufs bei der erfindungsgemäßen Bildstabilisierung.

Detaillierte Beschreibung der Erfindung

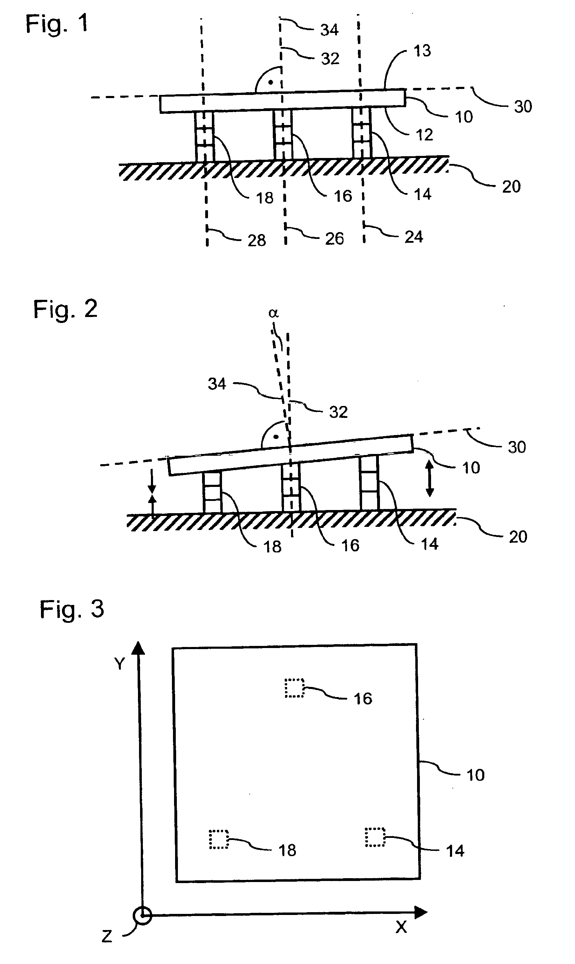

Fig. 1 zeigt einen Bildaufnahmesensor in Form eines CCD-Chips 10, an dessen Rückseite 12 drei Stellglieder 14, 16, 18 angeordnet und befestigt sind. Die Stellglieder 14, 16, 18 verbinden den CCD-Chip 10 mit einer Gehäusewandung 20. Die Rückseite 12 liegt der optisch aktiven Vorderseite 13 des CCD-Chips 10 gegenüber.

Die mikromechanischen Stellglieder 14, 16, 18 werden durch Piezoelemente gebildet, welche jeweils entlang ihrer Längsachsen 24, 26, 28, die senkrecht auf der Bildebene 30 des CCD-Chips 10 stehen, kontrahieren oder expandieren, um den CCD-Chip 10 um die Ruhenormale 32 der Bildebene 30 zu kippen. Die Integration der Piezo-Stellglieder 14, 16, 18 an der Rückseite 12, in den CCD-Chip 10 sowie die Befestigung der Piezo-Stellglieder der zweiten Gruppe an den Seitenflächen des CCD-Chips 10 garantiert eine preiswerte Massenproduktion. Fig. 1 zeigt den CCD-Chip in seiner Ruhestellung, in welcher er parallel zu der Gehäusewandung 20 verläuft.

Bezug nehmend auf Fig. 2 ist der CCD-Chip 10 in einer gekippten Stellung dargestellt. In dieser gekippten Stellung bildet die aktuelle Normale 34 der Bildebene 30 einen Winkel á zur Ruhenormalen 32.

Die Verkippung wird durch Expansion des linearen Piezo-Stellgliedes 14 und gleichzeitige Kontraktion des linearen Piezo-Stellgliedes 18 erzielt.

Bezug nehmend auf Fig. 3 ist die triangulare oder Dreibein-Anordnung der drei Piezo-Stellglieder 14, 16, 18 dargestellt, mittels welchen eine zwei-dimensionale Verkippung um die X-Achse und die Y-Achse, welche die Bildebene in der Ruhestellung aufspannen, bewerkstelligt wird.

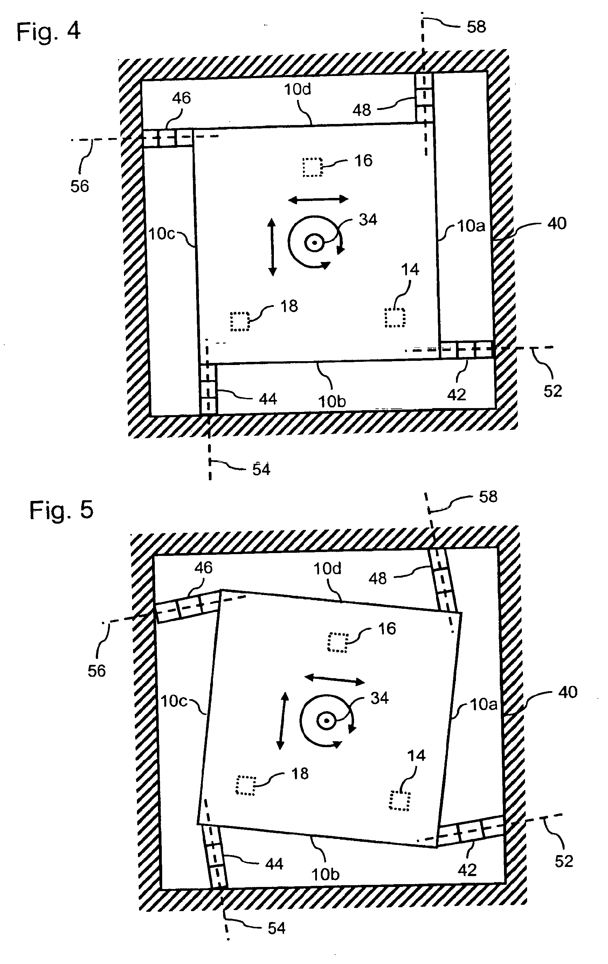

Bezug nehmend auf Fig. 4 ist der rechteckige CCD-Chip 10 in einem diesen umgebenden Gehäuse 40 mittels vier weiterer Stellglieder 42, 44, 46, 48 in Form von linearen PiezoStellgliedern innerhalb eines Gehäuses 40 aufgehängt.

Demnach bilden die Piezo-Stellglieder 14, 16, 18 eine erste Gruppe von Stellgliedern, welche die Verkippung des CCD-Chips 10 bewerkstelligen und die Piezo-Stellglieder 42, 44, 46, 48 bilden eine zweite Gruppe, welche eine Verdrehung des CCD-Chips 10 um seine in dieser Darstellung senkrecht zur Bildebene verlaufenden Normalen 34 zu bewerkstelligen.

Die Piezo-Stellglieder der zweiten Gruppe sind jeweils am Ende der Seiten 10a, 10b, 10c, 10d an den CCD-Chip 10 einerseits und an den Innenseiten des Gehäuses 40 andererseits befestigt. Dabei verläuft die Längsachse 52 des Piezo-Stellgliedes 42 parallel zu der benachbarten Seitenfläche 10b. Die übrigen Stellglieder der zweiten Gruppe sind entsprechend an den anderen Seiten angeordnet.

Bezug nehmend auf Fig. 5 ist der CCD-Chip 10 in einer um seine Normale 34 der Bildebene 30 gegenüber der Darstellung in Fig. 4 verdrehten Stellung gezeigt. Die Drehung ist dadurch erreicht, dass gleichzeitig alle vier Stellglieder 42, 44, 46, 48 der zweiten Gruppe expandiert sind. Dies bewirkt zwar eine leichte Verspannung der Stellglieder 14, 16, 18 der ersten Gruppe, beeinträchtigt die Funktion der Stellglieder der ersten Gruppe jedoch nicht wesentlich.

Wie in Fig. 5 ersichtlich ist, wird durch eine unabhängige Ansteuerung der Stellglieder der ersten Gruppe und der zweiten Gruppe eine zwei-dimensionale Kippbewegung um die X-Achse und um die Y-Achse bzw. Drehung um die Z-Achse, welche von der Normalen 34 gebildet wird, erzielt. Aufgrund der Kleinheit der Kipp- und Drehwinkel, kann die Bewegung um die drei genannten Achsen in guter Näherung als unabhängig gesteuert angesehen werden. Insbesondere kann mit einem einzigen Steuersignal pro Stellglied sowohl eine Bewegung des Objekts als auch der Kamera kompensiert werden. Dadurch kann mittels gezieltem Ansprechen oder Ansteuern der einzelnen Piezo-Stellglieder der CCD-Chip 10 in nahezu jede gewünschte Richtung ausgerichtet und dadurch die ungewollte Bewegung der Kamera ausgeglichen werden und die Bildstabilisierung kann Vielzahl von unterschiedlichen Verwacklungs-Bewegungs-Mustern effektiv kompensieren.

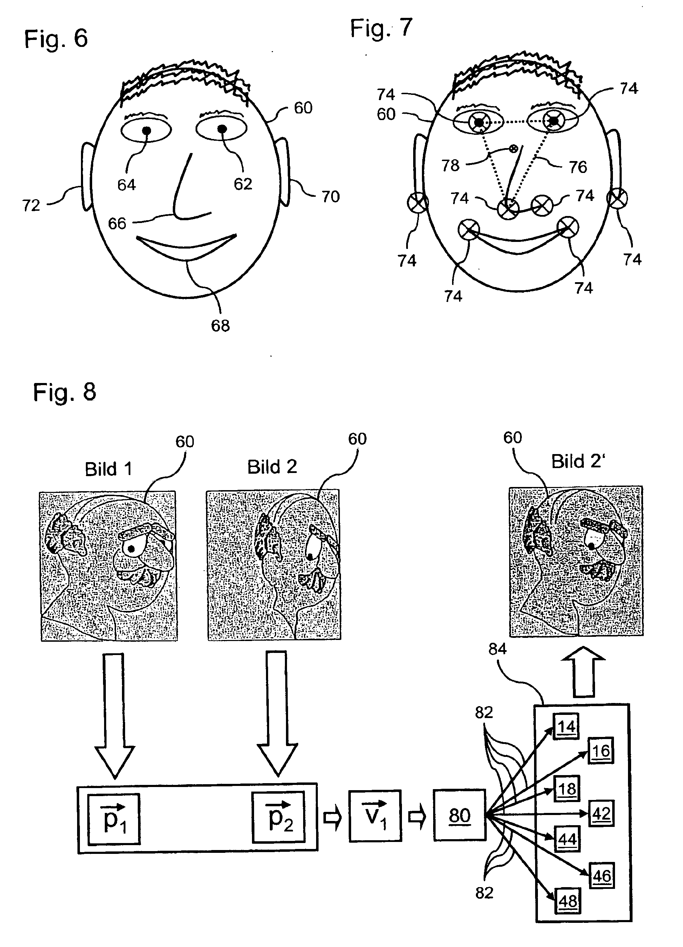

Bezug nehmend auf Fig. 6 ist eine schematische Darstellung eines Gesichts 60 als das Objekt, mit Augen 62, 64, einer Nase 66, einem Mund 68 und zwei Ohren 70, 72 beispielhaft dargestellt.

Bezug nehmend auf Fig. 7 wird von einer digital-elektronischen Recheneinrichtung in Form eines Mikrocomputers nach entsprechender Bilderkennung, welche dem Fachmann grundsätzlich bekannt ist, einigen markanten Gesichtselementen jeweils ein Bezugspunkt 74 zugeordnet. Die Recheneinrichtung, genauer eine entsprechend programmierte Software, berechnet aus mehreren, vorzugsweise aus drei der Bezugspunkte ein Polygon, in diesem Beispiel ein Dreieck 76. In diesem Beispiel wird das Dreieck durch die Bezugspunkte 74 der zwei Augen 62, 64 und der Nasenspitze 66 als besonders markante Gesichtselemente gebildet. Anschließend wird der Schwerpunkt 78 des Dreiecks 76 berechnet und als Referenzpunkt für die Bildstabilisierung festgelegt.

Bezug nehmend auf Fig. 8 wird zunächst Bild 1 des Videobild-Datenstroms aufgenommen und der Positionsvektor $\vec{P}_1$ des Referenzpunktes 78 bestimmt. Anschließend wird das nächste Bild 2 des Videobild-Datenstroms aufgenommen und der Positionsvektor $\vec{P}_2$ des Referenzpunktes 78 festgelegt.

Zum Beispiel durch einfache Differenzbildung der beiden Positionsvektoren $\vec{P}_1$ und $\vec{P}_2$ wird ein Verschiebungsvektor $\vec{v}_1$ ermittelt. Der Verschiebungsvektor $\vec{v}_1$ wird von einer Rechen- und Steuereinrichtung 80 eingelesen. In das mobile Endgerät, genauer in die Recheneinrichtung 80 ist hierzu eine Software einprogrammiert, die mittels der in den Fig. 6 bis Fig. 8 schematisch dargestellten Bilderkennung und Bewegungsnachverfolgung durchführt. Anschließend erzeugt die Rechen- und Steuereinrichtung 80 Steuersignale 82, mit welchen alle sieben Piezo-Stellglieder 14, 16, 18, 42, 44, 46, 48, welche gemeinsam die mechanische Ausgleichseinrichtung 84 bilden, derart unabhängig voneinander angesteuert werden, dass durch die dadurch bewerkstelligte zwei-dimensionale Verkippung und eindimensionale Drehung des CCD-Chips 10 das Abbild des Gesichts soweit wie möglich wieder an dieselbe Position wie bei Bild 1 gerückt und gedreht ist, soweit dies im Rahmen des Hubes der Stellglieder machbar ist. Für jedes Piezostellglied wird genau ein von den jeweils anderen unabhängiges Steuersignal verwendet. Vorteilhafterweise kann durch die Software-gestützte Bildstabilisierung auf Beschleunigungssensoren verzichtet werden.

Die Vorrichtungsstabilisierung wird zum Beispiel in mobile Endgeräte, insbesondere mobile Bildtelefone gemäß DECT-, GSM-, UMTS-Standard eingebaut und sind Teil eines im übrigen bekannten Kamerasystems.

Da die Bilderkennungs-Software vorteilhafterweise auch sehr geringe Bewegungen wahrnehmen kann, ist es einfach möglich, bewußte von unbewußten Bewegungen zu unterscheiden. Dies wird ebenfalls auf elektronischem Wege mittels einer Software bewerkstelligt.

Damit können Bewegungen mit kleinen Differenzwinkeln als unbeabsichtigte Bewegungen und somit Verwacklungen von der Recheneinrichtung interpretiert und mit dem vorstehend beschriebenen mikromechanischen Stabilisierungsverfahren kompensiert werden.

Bewegungen mit großen Differenzwinkeln werden von der Recheneinrichtung als bewußte Bewegungen interpretiert und folgerichtig nicht kompensiert.

Sobald mit Hilfe der Software eine als unbeabsichtigt interpretierte Bewegung registriert wird, wird der CCD-Chip 10, der das Bild aufnimmt, also entsprechend neu ausgerichtet, um die Bewegung der Kamera auszugleichen.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne den Shutzbereich der Ansprüche zu verlassen.

**Patentansprüche**

1. Vorrichtung zur Bildstabilisierung mittels Bildauswertung, umfassend:

ein Bildaufnahmesensor (10) zum Erzeugen von Bilddaten,
eine Recheneinrichtung (80), welche die Bilddaten von dem Bildaufnahmesensor (10) empfängt und verarbeitet, wobei die Recheneinrichtung (80) Detektionsmittel umfasst, welche zum Detektieren von Verwacklungen ausgebildet sind, derart dass eine Bildauswertung der Bilddaten durchgeführt wird und mithilfe der Detektionsmittel Veränderungen in der zeitlichen Abfolge der Bilddaten erkannt werden, wobei mittels der erkannten Veränderungen Steuersignale (82) zur Steuerung mikromechanischer Stellglieder (14, 16, 18, 42, 44, 46, 48) erzeugt werden

**dadurch gekennzeichnet, dass**

eine Mehrzahl von mikromechanischen Stellgliedern (14, 16, 18, 42, 44, 46, 48) umfasst ist, der Bildaufnahmesensor (10) an den mikromechanischen Stellgliedern (14, 16, 18, 42, 44, 46, 48) aufgehängt ist,
und
die mikromechanischen Stellglieder mittels der Steuersignale (82) derart gesteuert werden, dass der Bildaufnahmesensor (10) mechanisch bewegt wird, um der Verwacklung entgegenzuwirken und das Bild zu stabilisieren, wobei ferner die Mehrzahl der Stellglieder (14, 16, 18, 42, 44, 46, 48) eine erste Gruppe von Stellgliedern (14, 16, 18) umfasst und die Stellglieder der ersten Gruppe zur Durchführung einer Linearbewegung entlang einer Längsachse ausgebildet sind und die Stellglieder (14, 16, 18) der ersten Gruppe mit ihrer jeweiligen Längsachse (24, 26, 28) quer zur Bildebene (30) des Bildaufnahmesensors (10) angeordnet sind, um eine Verkippung des Bildaufnahmesensors (10) quer zur Normalen (32) der Bildebene (30) zu bewerkstelligen, wobei ferner
die Mehrzahl der Stellglieder eine zweite Gruppe von Stellgliedern (42, 44, 46, 48) umfasst und die Stellglieder der zweiten Gruppe zur Durchführung einer Linearbewegung entlang einer Längsachse (52, 54, 56, 58) ausgebildet sind und die Stellglieder der zweiten Gruppe mit ihrer jeweiligen Längsachse quer zur Normalen (32) der Bildebene (30) des Bildaufnahmesensors (10) angeordnet sind, um eine Drehung des Bildaufnahmesensors um die Normale der Bildebene (30) zu bewerkstelligen.

2. Vorrichtung nach Anspruch 1,
**dadurch gekennzeichnet, dass**
die Stellglieder (14, 16, 18) der ersten Gruppe an der Rückseite (12) des Bildaufnahmesensors (10) angebracht sind.

3. Vorrichtung nach Anspruch 1,
**dadurch gekennzeichnet, dass**
der Bildaufnahmesensor (10) ein CCD-Chip ist und die Stellglieder (14, 16, 18) der ersten Gruppe auf der Rückseite (12) des CCD-Chips in den Chip integriert sind.

4. Vorrichtung nach Anspruch 1, 2 oder 3,
**dadurch gekennzeichnet, dass**
die erste Gruppe zumindest drei Stellglieder (14, 16, 18) umfasst, welche derart an der Rückseite (12) des Bildaufnahmesensors angeordnet sind, dass mittels der Stellglieder der ersten Gruppe eine zweidimensionale Verkippung (X, Y) des Bildaufnahmesensors (10) quer zur Normalen (32) der Bildebene (30) ermöglicht ist.

5. Vorrichtung nach einem der vorstehenden Ansprüche,
**dadurch gekennzeichnet, dass**
der Bildaufnahmesensor (10) Seitenflächen (10a-d) definiert, welche quer zur Bildebene (30) verlaufen und die Stellglieder (42, 44, 46, 48) der zweiten Gruppe an den Seitenflächen (10a-d) aufgehängt sind.

6. vorrichtung nach Anspruch 5,
**dadurch gekennzeichnet, dass**
der Bildaufnahmesensor (10) vier Seitenflächen (10a-d) aufweist und in seiner Bildebene (30) im wesentlichen rechteckig ausgebildet ist, die zweite Gruppe zumindest vier Stellglieder (42, 44, 46, 48) umfasst, welche jeweils am Ende einer Seitenfläche (10a-d) aufgehängt sind und mit ihrer jeweiligen Lächsachse (52, 54, 56, 58) parallel zu einer benachbarten Seitenfläche verlaufen, derart dass mittels der Stellglieder (42, 44, 46, 48) der zweiten Gruppe eine bidirektionale Drehung des Bildaufnahmesensors (10) um die Normale der Bildebene (30) ermöglicht ist.

7. Vorrichtung nach einem der vorstehenden Ansprüche,
**dadurch gekennzeichnet, dass**
die Mehrzahl der Stellglieder in eine erste und zweite Gruppe von Stellgliedern (14, 16, 18; 42, 44, 46, 48) unterteilt ist, wobei die Stellglieder (14, 16, 18) der ersten Gruppe senkrecht zu den Stellgliedern (42, 44, 46, 48) der zweiten Gruppe verlaufen und mittels der Stellglieder der ersten Gruppe eine Verkippung (X, Y) des Bildaufnahmesensors (10) quer zur Normalen der Bildebene (30) durchgeführt wird und mit den Stellgliedern (42, 44, 46, 48) der zweiten Gruppe eine Drehung des Bildaufnahmesensors (10) um die Normale des Bildaufnahmesensors (30) durchgeführt wird.

8. Vorrichtung nach einem der vorstehenden Ansprüche,
**dadurch gekennzeichnet, dass**
die Steuersignale (82) elektrische Steuersignale sind und für jedes Stellglied ein unabhängiges Steuersignal erzeugt wird.

9. Vorrichtung nach einem der vorstehenden Ansprüche,
**dadurch gekennzeichnet, dass**
die Stellglieder (14, 16, 18, 42, 44, 46, 48) durch Piezoelemente gebildet werden, welche unmittelbar mittels der Steuersignale (82) angetrieben werden.

10. Vorrichtung nach einem der vorstehenden Ansprüche,
**dadurch gekennzeichnet, dass**
der Bildaufnahmesensor (10) in einem Gehäuse (40) angeordnet und mittels der Stellglieder innerhalb des Gehäuses beweglich an diesem aufgehängt ist.

11. Vorrichtung nach einem der vorstehenden Ansprüche,
**dadurch gekennzeichnet, dass** die Detektionsmittel anhand der zeitlichen Abfolge der Bilddaten Differenzwinkel bestimmen und anhand der Größe der Differenzwinkel und vordefinierter Entscheidungskriterien eine Unterscheidung zwischen gewollten und ungewollten Bewegungen getroffen wird und lediglich die als ungewollt definierten Bewegungen kompensiert werden.

12. Vorrichtung nach einem der vorstehenden Ansprüche,
**dadurch gekennzeichnet, dass**
mittels der Detektionsmittel eine Gesichtserkennung durchgeführt wird.

13. Vorrichtung nach Anspruch 12,
**dadurch gekennzeichnet, dass**
die Gesichtserkennung zumindest eine Erkennung von mehreren markanten Gesichtsmerkmalen (62, 64, 66, 68, 70, 72), welche aus der Gruppe gebildet von Augen (62, 64), Nase (66) und Mund (68) eines Gesichts (60) ausgewählt sind, durchgeführt wird, derart dass den erkannten Gesichtsmerkmalen jeweils ein Bezugspunkt (74) zugeordnet wird, wobei aus einem oder mehreren Bezugspunkten zumindest ein Referenzpunkt (78) gebildet wird und die Bildstabilisierung anhand einer Nachverfolgung des zumindest einen Referenzpunktes (78) in jedem Einzelbild bewerkstelligt wird.

14. Verwendung der Vorrichtung nach einem der vorstehenden Ansprüche in einem handhaltbaren mobilen Bildtelefon.

## Claims

1. A device for image stabilization based on image analysis, comprising:

an image pickup sensor (10) for generating image data;
a computing device (80) which receives and processes the image data from the image pickup sensor (10), said computing device (80) comprising detecting means which are configured to detect judder by performing an image analysis of the image data and detecting changes in the time sequence of the image data using the detection means, wherein based on the detected changes control signals (82) are generated for controlling micro-mechanical actuators (14, 16, 18, 42, 44, 46, 48)
**characterized in that**
a plurality of micro-mechanical actuators (14, 16, 18, 42, 44, 46, 48) is comprised;
the image pickup sensor (10) is suspended from the micro-mechanical actuators (14, 16, 18, 42, 44, 46, 48);
and
the micro-mechanical actuators are controlled by said control signals (82) such that the image pickup sensor (10) is mechanically moved in order to counteract the judder and to stabilize the image; wherein further the plurality of actuators (14, 16, 18, 42, 44, 46, 48) comprise a first group of actuators (14, 16, 18), and the actuators of said first group are adapted to perform a linear movement along a longitudinal axis thereof, and the actuators (14, 16, 18) of the first group are arranged with their respective longitudinal axis (24, 26, 28) transversely to the image plane (30) of the image pickup sensor (10) in order to accomplish a tilting of the image pickup sensor (10) transversely to the normal (32) of the image plane (30); wherein further the plurality of actuators comprise a second group of actuators (42, 44, 46, 48), and the actuators of the second group are adapted to perform a linear movement along a longitudinal axis (52, 54, 56, 58) thereof, and the actuators of the second group are arranged with their respective longitudinal axis transversely to the normal (32) of the image plane (30) of the image pickup sensor (10) in order to accomplish pivoting of the image pickup sensor around the normal of the image plane (30).

2. The device according to claim 1, **characterized in that** the actuators (14, 16, 18) of the first group are mounted to the rear face (12) of the image pickup sensor (10).

3. The device according to claim 1, **characterized in that** the image pickup sensor (10) is a CCD chip, and the actuators (14, 16, 18) of the first group are integrated in the chip at the rear face (12) of the CCD chip.

4. The device according to claim 1, 2 or 3, **characterized in that** the first group comprises at least three actuators (14, 16, 18) which are arranged at the rear face (12) of the image pickup sensor in such a manner that by means of the actuators of the first group the image pickup sensor (10) can be tilted two-dimensionally (X, Y) transversely to the normal (32) of the image plane (30).

5. The device according to any of the preceding claims, **characterized in that** the image pickup sensor (10) defines lateral surfaces (10a-d) which extend transversely to the image plane (30), and the actuators (42, 44, 46, 48) of the second group are suspended from said lateral surfaces (10a-d).

6. The device according to claim 5, **characterized in that** the image pickup sensor (10) has four lateral surfaces (10a-d) and has a substantially rectangular shape in its image plane (30), the second group comprises at least four actuators (42, 44, 46, 48) each of which is suspended from a respective end of a lateral surface (10a-d) and has a longitudinal axis (52, 54, 56, 58) extending in parallel to an adjacent lateral surface, so that by means of the actuators (42, 44, 46, 48) of the second group the image pickup sensor (10) can be pivoted bi-directionally around the normal of the image plane (30).

7. The device according to any of the preceding claims, **characterized in that** the plurality of actuators are divided into a first and a second group of actuators (14, 16, 18; 42, 44, 46, 48), wherein the actuators (14, 16, 18) of the first group extend perpendicular to the actuators (42, 44, 46, 48) of the second group, and wherein by means of the actuators of the first group, tilting (X, Y) of the image pickup sensor (10) is accomplished transversely to the normal of the image plane (30), and by means of the actuators (42, 44, 46, 48) of the second group pivoting of the image pickup sensor (10) is accomplished around the normal of the image plane (30).

8. The device according to any of the preceding claims, **characterized in that** the control signals (82) are electrical control signals, and that for each actuator an independent control signal is generated.

9. The device according to any of the preceding claims, **characterized in that** the actuators (14, 16, 18, 42, 44, 46, 48) comprise piezoelectric elements which are directly driven by the control signals (82).

10. The device according to any of the preceding claims, **characterized in that** the image pickup sensor (10) is arranged in a housing (40) and is movably suspended within the housing by means of the actuators.

11. The device according to any of the preceding claims, **characterized in that** the detection means determine differential angles from the time sequence of the image data, and based on the size of the differential angles and on predefined decision criteria a distinction is made between intended and unintended movements, and only the movements which are classified as unintended are compensated for.

12. The device according to any of the preceding claims, **characterized in that** a face detection is performed using the detection means.

13. The device according to claim 12, **characterized in that** the face detection comprises at least a detection of a plurality of distinctive facial features (62, 64, 66, 68, 70, 72) selected from a group including eyes (62, 64), nose (66), and mouth (68) of a face (60), so that each of the detected facial features has a reference point (74) associated therewith, and wherein a reference center (78) is defined by one or more reference points, and the image stabilization is accomplished based on tracking the at least one reference center (78) in each image frame.

14. Use of the device according to any one of the preceding claims in a hand-held mobile video telephone.

**Revendications**

1. Dispositif pour la stabilisation d'image par analyse d'image, comprenant :

un capteur d'enregistrement d'image (10) pour la génération de données d'image,

un dispositif de calcul (80), qui reçoit les données d'image du capteur d'enregistrement d'image (10) et traite celles-ci, ledit dispositif de calcul (80) comprenant un moyen de détection prévu pour la détection de bougés, de manière à exécuter une analyse d'image des données d'image et à reconnaître à l'aide du moyen de détection des modifications dans la séquence temporelle des données d'image, des signaux de commande (82) étant générés à l'aide des modifications reconnues pour la commande d'éléments micromécaniques de réglage (14, 16, 18, 42, 44, 46, 48), **caractérisé en ce que** :

une pluralité d'éléments micromécaniques de réglage (14, 16, 18, 42, 44, 46, 48) est comprise,

le capteur d'enregistrement d'image (10) est attaché aux éléments micromécaniques de réglage (14, 16, 18, 42, 44, 46, 48), et

les éléments micromécaniques de réglage sont commandés par les signaux de commande (82) de manière à déplacer mécaniquement le capteur d'enregistrement d'image (10) pour contrecarrer le bougé et stabiliser l'image,

la pluralité des éléments de réglage (14, 16, 18, 42, 44, 46, 48) comprenant en outre un premier groupe d'éléments de réglage (14, 16, 18), les éléments de réglage du premier groupe étant prévus pour l'exécution d'un déplacement linéaire le long d'un axe longitudinal, et les éléments de réglage (14, 16, 18) du premier groupe étant disposés chacun par son axe longitudinal (24, 26, 28) transversalement au plan d'image (30) du capteur d'enregistrement d'image (10) pour provoquer un basculement du capteur d'enregistrement d'image (10) transversalement à la normale (32) du plan d'image (30),

la pluralité des éléments de réglage comprenant en outre un deuxième groupe d'éléments de réglage (42, 44, 46, 48), les éléments de réglage du deuxième groupe étant prévus pour l'exécution d'un déplacement linéaire le long d'un axe longitudinal (52, 54, 56, 58), et les éléments de réglage du deuxième groupe étant disposés chacun par son axe longitudinal transversalement à la normale (32) du plan d'image (30) du capteur d'enregistrement d'image (10) pour provoquer une rotation du capteur d'enregistrement d'image autour de la normale du plan d'image (30).

2. Dispositif selon la revendication 1, **caractérisé en ce que** :

les éléments de réglage (14, 16, 18) du premier groupe sont disposés contre la face arrière (12) du capteur d'enregistrement d'image (10).

3. Dispositif selon la revendication 1, **caractérisé en ce que** :

le capteur d'enregistrement d'image (10) est une puce CCD et **en ce que** les éléments de réglage (14, 16, 18) du premier groupe sont intégrés à la puce sur la face arrière (12) de la puce CCD.

4. Dispositif selon la revendication 1, 2 ou 3, **caractérisé en ce que** :

le premier groupe comprend au moins trois éléments de réglage (14, 16, 18) disposés contre la face arrière (12) du capteur d'enregistrement d'image de manière à permettre un basculement bidimensionnel (X, Y) du capteur d'enregistrement d'image (10) transversalement à la normale (32) du plan d'image (30) au moyen des éléments de réglage du premier groupe.

5. Dispositif selon l'une des revendications précédentes, **caractérisé en ce que** :

le capteur d'enregistrement d'image (10) définit des surfaces latérales (10a-d) qui s'étendent transversalement au plan d'image (30) et **en ce que** les éléments de réglage (42, 44, 46, 48) du deuxième groupe sont attachés sur les surfaces latérales (10a-d).

6. Dispositif selon la revendication 5, **caractérisé en ce que** :

le capteur d'enregistrement d'image (10) comporte quatre surfaces latérales (10a-d) et est prévu sensiblement sous forme de rectangle sur son plan d'image (30), le deuxième groupe comprenant au moins quatre éléments de réglage (42, 44, 46, 48) attachés chacun à l'extrémité d'une surface latérale (10a-d) et s'étendant chacun par son axe longitudinal (52, 54, 56, 58) parallèlement à une surface latérale contiguë de manière à permettre une rotation bidimensionnelle du capteur d'enregistrement d'image (10) autour de la normale du plan d'image (30) au moyen des éléments de réglage (42, 44, 46, 48) du deuxième groupe.

7. Dispositif selon l'une des revendications précédentes, **caractérisé en ce que** :

la pluralité des éléments de réglage est divisée en un premier et un deuxième groupe d'éléments de réglage (14, 16, 18 ; 42, 44, 46, 48), les éléments de réglage (14, 16, 18) du premier groupe s'étendant perpendiculairement aux éléments de réglage (42, 44, 46, 48) du deuxième groupe, un basculement (X, Y) du capteur d'enregistrement d'image (10) transversalement à la normale du plan d'image (30) étant effectué au moyen des éléments de réglage du premier groupe, et une rotation du capteur d'enregistrement d'image (10) étant effectuée autour de la normale du capteur d'enregistrement d'image (30) avec les éléments de réglage (42, 44, 46, 48) du deuxième groupe.

**8.** Dispositif selon l'une des revendications précédentes, **caractérisé en ce que** :

les signaux de commande (82) sont des signaux de commande électriques et **en ce qu'**un signal de commande indépendant est généré pour chaque élément de réglage.

**9.** Dispositif selon l'une des revendications précédentes, **caractérisé en ce que** :

les éléments de réglage (14, 16, 18, 42, 44, 46, 48) sont formés par des éléments piézoélectriques entraînés directement au moyen des signaux de commande (82).

**10.** Dispositif selon l'une des revendications précédentes, **caractérisé en ce que** :

le capteur d'enregistrement d'image (10) est disposé dans un boîtier (40), et est attaché au boîtier de manière à être mobile à l'intérieur de celui-ci au moyen des éléments de réglage.

**11.** Dispositif selon l'une des revendications précédentes, **caractérisé en ce que** :

le moyen de détection détermine des angles différentiels à partir de la séquence temporelle des données d'image, **en ce qu'**une distinction est faite entre déplacements voulus et non voulus à partir de la grandeur des angles différentiels et de critères de décision prédéfinis, et **en ce que** seuls les déplacements définis comme non voulus sont compensés.

**12.** Dispositif selon l'une des revendications précédentes, **caractérisé en ce que** :

une reconnaissance de visage est effectuée à l'aide du moyen de détection.

**13.** Dispositif selon la revendication 12, **caractérisé en ce que** :

la reconnaissance de visage effectue au moins une reconnaissance de plusieurs caractéristiques (62, 64, 66, 68, 70, 72) marquantes de visage, sélectionnées dans le groupe composé des yeux (62, 64), du nez (66) et de la bouche (68) d'un visage (60), de manière à associer un point de base de référence (74) à chaque caractéristique de visage reconnue, au moins un point de référence (78) étant formé à partir d'un ou plusieurs points de base de référence et la stabilisation d'image étant réalisée sur la base d'un suivi de l'au moins un point de référence (78) dans chaque image individuelle.

**14.** Utilisation du dispositif selon l'une des revendications précédentes, dans un visiophone portatif mobile.

Fig. 1

Fig. 2

Fig. 3

Fig. 4

Fig. 5

EP 1 638 317 B1

Fig. 6

Fig. 7

Fig. 8

Bild 1

Bild 2

Bild 2'

$\vec{p_1}$

$\vec{p_2}$

$\vec{v_1}$

80

14

16

18

42

44

46

48

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0498730 A2
- EP 0956695 B1
- EP 1304872 A1
- WO 0237179 A2
- JP 2058481 A
- JP 9261524 A
- DE 19942900 B4